# EUROPÄISCHE PATENTANMELDUNG

(11) **EP 0 979 017 A1**
(43) Veröffentlichungstag der Anmeldung: **09.02.2000**
(21) Anmeldenummer: 98114943.8
(22) Anmeldetag: 07.08.1998
(51) Int. Cl.: H04Q 7/38

(54) **Verfahren zur Kanalzuweisung und Funk-Kommunikationssystem**

(71) Anmelder: SIEMENS AKTIENGESELLSCHAFT, 80333 München (DE)
(72) Erfinder: Benz, Michael, Dipl.-Ing., 13629 Berlin (DE); Li, Wanlin, Dr. rer. nat., 13629 Berlin (DE)

(57) **Zusammenfassung**

Beim erfindungsgemäßen Verfahren zur Kanalzuweisung wird für eine Funkübertragung zwischen einer Basisstation und Mobilstationen ein TDD-Übertragungsverfahren mit Zeitschlitzen als Kanälen benutzt, wobei ein Umschaltpunkt Zeitschlitze für die Aufwärtsrichtung und Zeitschlitze für die Abwärtsrichtung trennt. Für die Funkübertragung zwischen der Basisstation und mehreren Mobilstationen wird jeweils ein Übertragungsparameter bezüglich der Übertragungsqualität bestimmt. Den Mobilstationen mit dem qualitativ besseren Übertragungsparameter werden bevorzugt Zeitschlitze nahe dem Umschaltpunkt zugewiesen.

## Beschreibung

Die Erfindung betrifft ein Verfahren zur Kanalzuweisung und ein Funk-Kommunikationsystem, insbesondere ein Mobilfunksystem mit TDD-Teilnehmerseparierung (TDD time division duplex).

In Funk-Kommunikationssystemen werden Informationen (beispielsweise Sprache, Bildinformationen oder andere Daten) mit Hilfe von elektromagnetischen Wellen über eine Funkschnittstelle zwischen sendender und empfangender Funkstation (Basisstation bzw. Mobilstation) übertragen. Das Abstrahlen der elektromagnetischen Wellen erfolgt dabei mit Trägerfrequenzen, die in dem für das jeweilige System vorgesehenen Frequenzband liegen. Für zukünftige Mobilfunksysteme mit CDMA- oder TD/CDMA-Übertragungsverfahren über die Funkschnittstelle, beispielsweise das UMTS (Universal Mobile Telecommunication System) oder andere Systeme der 3. Generation sind Frequenzen im Frequenzband von ca. 2000 MHz vorgesehen.

Frequenzmultiplex (FDMA), Zeitlagenmultiplex (TDMA) oder ein als Codemultiplex (CDMA) bekanntes Verfahren dienen der Unterscheidung der Signalquellen und damit zur Auswertung der Signale. Eine besondere Ausprägung des Zeitlagenmultiplex ist ein TDD (time division duplex) Übertragungsverfahren, bei dem in einem gemeinsamen Frequenzband die Übertragung zeitlich getrennt sowohl in Aufwärtsrichtung, d.h. von der Mobilstation zur Basisstation, als auch in Abwärtsrichtung, d.h. von der Basisstation zur Mobilstation, erfolgt.

Das TDD-Übertragungsverfahren unterstützt besonders asymmetrische Dienste, bei denen die Übertragungskapazität in Aufwärtsrichtung nicht gleich der in Abwärtsrichtung zu sein braucht. Diese Asymmetrie wird in der Regel nicht in allen Funkzellen gleichermaßen gewünscht sein, so daß ein kritisches Interferenzszenario entsteht. Die bisher gemachten Überlegungen zum TDD-Übertragungsverfahren verkennen die Probleme der gegenseitigen Störungen einer Vielzahl von Basisstationen und Mobilstationen, die im gleichen Frequenzband betrieben werden.

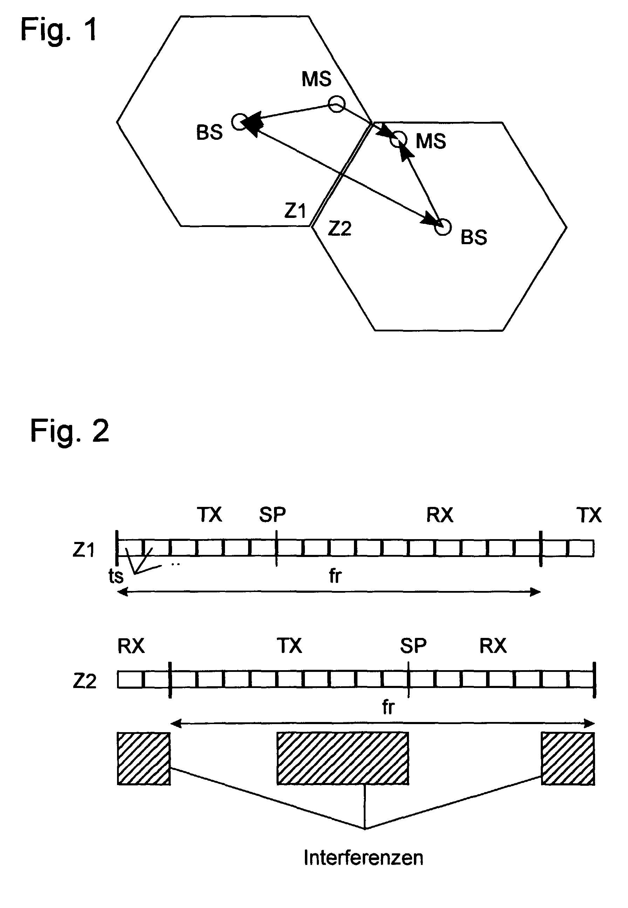

Für zwei benachbarte Zellen Z1 und Z2 mit Basisstationen BS und Mobilstationen MS nach FIG. 1 ergeben sich für eine Mobilstation MS, die Signale der ihr zugeordneten Basisstation BS empfängt, besonders starke Interferenzen von einer Mobilstation MS, die sich nahebei in der Nachbarzelle befindet. Dieser Fall ist besonders an den Zellgrenzen kritisch, wobei bei einer homogener Verteilung der Mobilstationen dieser Fall sehr oft auftritt.

So ergeben sich nach FIG. 2 Interferenzen für die Konstellation, daß sich der Sendefall TX einer Mobilstation MS mit dem Empfangsfall RX der anderen Mobilstation MS überlappt. Ein Umschaltpunkt SP (switching point) trennt dabei jeweils den Sende- TX und den Empfangsfall RX. Für eine rahmenweise Übertragung, wobei ein Rahmen fr mehrere Zeitschlitze ts umfaßt, sind die Interferenzen proportional der Verschiebung des Rahmenbeginns und der Position des Umschaltpunkts SP zwischen beiden Zellen Z1, Z2. Starke Interferenzen verursachen Verluste bei der spektralen Effizienz des Funk-Kommunikationssystems. Aus EP 98 107 763 und DE 198 18 325 sind Lösungen zur Verringerung der Interferenz durch eine Rahmensynchronisation bekannt.

Der Erfindung liegt darüber hinausgehend die Aufgabe zugrunde, ein verbessertes Verfahren und ein verbessertes Funk-Kommunikationssystem anzugeben, bei denen die Interferenzen weiter verringert. Diese Aufgabe wird durch das Verfahren mit den Merkmalen des Anspruchs 1 bzw. 7 und das Funk-Kommunikationssystem mit den Merkmalen des Anspruchs 13 gelöst. Vorteilhafte Weiterbildungen sind den Unteransprüchen zu entnehmen.

Beim erfindungsgemäßen Verfahren zur Kanalzuweisung wird für eine Funkübertragung zwischen einer Basisstation und Mobilstationen ein TDD-Übertragungsverfahren mit Zeitschlitzen als Kanälen benutzt wird, wobei ein Umschaltpunkt Zeitschlitze für die Aufwärtsrichtung und Zeitschlitze für die Abwärtsrichtung trennt. Für die Funkübertragung zwischen der Basisstation und mehreren Mobilstationen wird jeweils ein Übertragungsparameter bezüglich der Übertragungsqualität bestimmt. Den Mobilstationen mit dem qualitativ besseren Übertragungsparameter werden bevorzugt Zeitschlitze nahe dem Umschaltpunkt zugewiesen.

Sind die Umschaltpunkte benachbarter Funkzellen unterschiedlich, dann sind Interferenzen trotz Rahmensynchronisation unvermeidbar. Da jedoch um den Umschaltpunkt die Verbindungen zu Mobilstationen mit guter Übertragungsqualität angeordnet sind, so kann deren Sendeleistung u.ä. entsprechend der guten Übertragungsbedingungen auf einen minimalen Interferenzeinfluß für die übrigen Mobil- und Basisstationen eingestellt werden. Damit sinkt die funkzellenüberschreitende Interferenz im Funk-Kommunikationssystem.

In einer Gruppe benachbarter Basisstationen wird nach einer vorteilhaften Weiterbildung der Erfindung ein Gebietsumschaltpunkt festgelegt und den Mobilstationen mit dem qualitativ besseren Übertragungsparameter bevorzugt Zeitschlitze zwischen dem funkzellenspezifischen Umschaltpunkt und dem Gebietsumschaltpunkt zugewiesen. Damit wird nicht nur bezogen auf eine Zelle, sondern in zumindest einem Teilbereich eines Funk-Kommunikationssystems die Interferenz verringert. Der Gebietsumschaltpunkt gibt gebietsbezogen einen Durchschnittswert für die Asymmetrie an. Für die Differenz zwischen dem funkzellenspezifischen Umschaltpunkt und dem Gebietsumschaltpunkt wird vorteilhafterweise eine erste obere Schranke festgelegt, die administrierbar ist. Stören sich die benachbarten Zellen wenig, z.B. im Indoorbereich zwischen verschiedenen Zimmern, so kann eine große obere Schranke eingestellt werden. Vorteilhaft ist es ebenso, wenn die erste obere Schranke abhängig von der Anzahl der Mobilstationen eingestellt wird, für die ein qualitativ guter Übertragungsparameter bestimmt wurde. Damit stellt die Schranke keine allzugroße Einschränkung für die Übertragungskapazität dar, wenn bei wenigen Mobilstationen mit guten Übertragungsparametern die Zeitschlitze um den Umschaltpunkt kaum gefüllt werden können.

Es liegt im Rahmen der Erfindung, daß im Funk-Kommunikationssystem ein Basis-Umschaltpunkt festgelegt ist, von dem die funkzellenspezifischen Umschaltpunkte bzw. die Gebietsumschaltpunkte nur eine Abweichung von maximial einer zweiten oberen Schranke haben dürfen. Durch diese Maßnahme wird netzweit die Adminstrierung der Umschaltpunkte unterstützt und über Gebietsgrenzen hinaus die Interferenz gering gehalten. Dabei ist es vorteilhaft, wenn zwischen Gruppen von Basisstationen mit unterschiedlichen Gebietsumschaltpunkten Pufferzonen mit Funkzellen administriert werden, in denen der Basis-Umschaltpunkt verbindlich ist. Damit wird ein störungsarmer Übergang zwischen Gebieten geschaffen, die einen sehr unterschiedlichen Bedarf bezüglich der Asymmetrie der Funkübertragung haben.

Durch die Einführung von Gebietsumschaltpunkten und einem Basisumschaltpunkt wird ein Rahmen geschaffen, innerhalb dessen die einzelnen Basisstationen bedarfsgerecht den funkzellenspezifischen Umschaltpunkt eingestellt werden kann, ohne daß dies mit höheren Funktionsebenen abgestimmt werden muß.

Besonders für Übertragungsverfahren, die mehrere Umschaltpunkte innerhalb eines Rahmens nutzen, wird nach einer alternativen Ausbildung der Erfindung ein Standard-TDD-Schema festgelegt, an den jedoch die Basisstationen der einzelnen Funkzellen nicht gebunden sind. Den Mobilstationen mit dem qualitativ besseren Übertragungsparametern werden zur Interferenzverringerung bevorzugt Zeitschlitze zugewiesen, die entgegen dem Standard-TDD-Schema für die umgekehrte Übertragungsrichtung genutzt werden. Eine Abweichung vom Standard-TDD-Schema führt dazu, daß ein oder mehrere Zeitschlitze nicht mehr für die Auf- sondern für die Abwärtsrichtung (oder umgekehrt) genutzt werden. Da davon auszugehen ist, daß in der Nachbarfunkzelle das Standard-TDD-Schema benutzt wird, werden diese interferenzanfälligen Zeitschlitze den Verbindungen zu Mobilstationen mit guter Übertragungsqualität zugeteilt.

Besonders vorteilhaft ist es, daß vom Standard-TDD-Schema in voreingestellter bzw. mit den Nachbarbasisstationen abgesprochener Weise abgewichen wird, d.h. von mehreren möglichen Zeitschlitzen, die in umgekehrter Übertragungsrichtung genutzt werden können, benutzen mehrere Basisstationen möglichst die gleichen Zeitschlitze für diesen Zweck. Damit entstehen weniger Interferenzen trotz einer Abweichung vom Standard-TDD-Schema.

Der oder die Übertragungsparameter, die die Basis für eine Kanalzuweisung bilden, sind auf eine Signallaufzeit zwischen der Basisstation und der Mobilstation, auf eine Empfangsleistung bei der jeweils empfangenden Station, auf den Interferenzeinfluß der Funkübertragung von und/oder zur Mobilstation auf benachbarte Funkzellen und/oder auf die Position der Mobilstation innerhalb der Funkzelle bezogen. Diese Größen können ohne großen Mehraufwand aus den üblicherweise ermittelten Übertragungskenngrößen der Funkverbindung zwischen Basisstation und Mobilstation abgeleitet werden. Entsprechend der guten Übertragungsqualität werden die Übertragungsverhältnisse für die Mobilstationen mit Zeitschlitzen um den Umschaltpunkt auf geringe Interferenzen für die Nachbarzellen eingestellt.

Nach einer vorteilhaften Weiterbildung der Erfindung ist die Funkübertragung innerhalb von zumindest Teilen des Funk-Kommunikationssystems rahmensynchron und die Umschaltpunkte benachbarter Basisstationen werden verkehrsabhängig eingestellt. Die Rahmensynchronisierung verringert die Interferenzen. Die verkehrsabhängige Einstellung des Umschaltpunktes führt zu einer verbesserten Ausnutzung der Übertragungskapazität, da je nach Bedarf die Aufwärts- oder die Abwärtsrichtung bevorzugt werden kann.

Im folgenden wird die Erfindung anhand eines Ausführungsbeispiels bezugnehmend auf zeichnerische Darstellungen näher erläutert.

Dabei zeigen
- FIG 3: ein Blockschaltbild eines Mobilfunksystems,
- FIG 4 bis 6: die Bestimmung von Übertragungsparametern für die Funkübertragung zwischen Basisstation und Mobilstationen,
- FIG 7: eine Aufteilung einer Funkzelle in Zellkern und Zellrand,
- FIG 8: eine Zuweisung von Mobilstationen zu Zeitschlitzen,
- FIG 9 und 10: schematische Darstellungen der Nutzung eines Gebietsumschaltpunktes,
- FIG 11: eine schematische Darstellung der Nutzung eines Basisumschaltpunktes, und
- FIG 12 bis 15: ein Umschalten von Zeitschlitzen von der Aufwärts- zur Abwärtsrichtung und eine interferenzarme Zuweisung von Mobilstationen zu Zeitschlitzen.

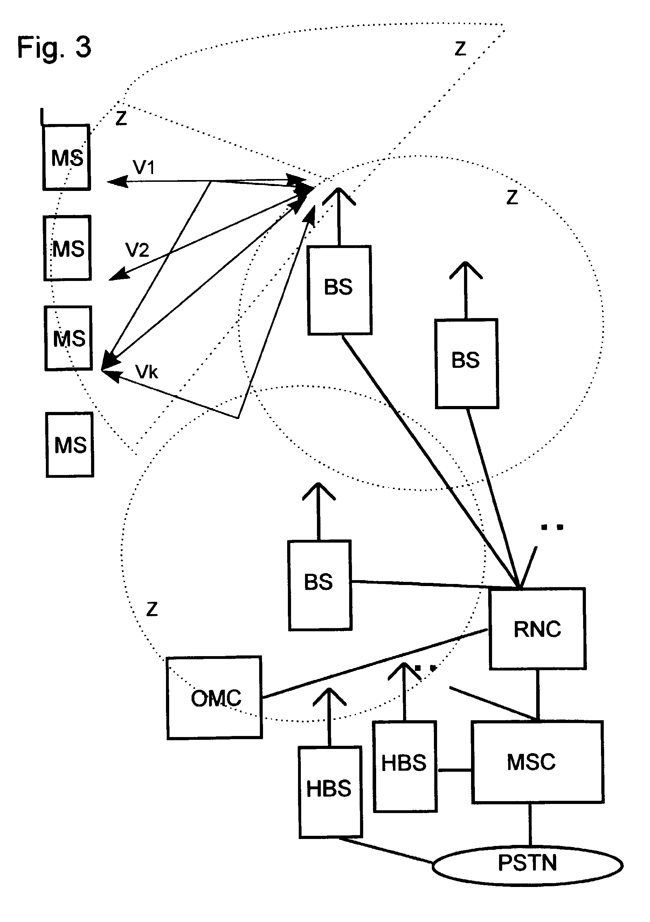

Das in FIG 3 dargestellte Mobilfunksystem als Beispiel eines Funk-Kommunikationssystems besteht aus Mobilvermittlungsstellen MSC, die untereinander vernetzt sind bzw. den Zugang zu einem Festnetz PSTN herstellen. Weiterhin sind diese Mobilvermittlungsstellen MSC mit jeweils zumindest einer Einrichtung RNC (radio network controller) zum Funkressourcenmanagement verbunden. Jede dieser Einrichtung RNC ermöglicht wiederum eine Verbindung zu zumindest einer Basisstation BS.

Eine solche Basisstation BS kann über eine Funkschnittstelle eine Verbindung zu weiteren Funkstationen, z.B. Mobilstationen MS oder anderweitigen mobilen und stationären Endgeräten aufbauen. Durch jede Basisstation BS wird zumindest eine Funkzelle Z gebildet. Bei einer Sektorisierung oder bei hierarchischen Zellstrukturen werden pro Basisstation BS auch mehrere Funkzellen Z versorgt. In FIG 3 sind beispielhaft Verbindungen V1, V2, Vk zur Übertragung von Nutzinformationen und Signalisierungsinformationen zwischen Mobilstationen MS und einer Basisstation BS dargestellt.

Ein Operations- und Wartungszentrum OMC realisiert Kontroll- und Wartungsfunktionen für das Mobilfunksystem bzw. für Teile davon. Die Funktionalität dieser Struktur ist auf andere Funk-Kommunikationssysteme übertragbar, in denen die Erfindung zum Einsatz kommen kann, insbesondere für Teilnehmerzugangsnetze mit drahlosem Teilnehmeranschluß. Auch Basisstationen, die als Heimbasisstationen HBS im privaten Bereich eingesetzt sind, ohne von der Funknetzplanung betroffen zu sein, können Verbindungen zu Mobilstationen MS aufbauen. Diese Heimbasisstationen HBS sind nicht direkt mit einer Einrichtung RNC zum Funkressourcenmanagement verbunden, jedoch an ein Festnetz PSTN oder eine Mobilvermittlungsstelle MSC angeschlossen. Eine Rahmensynchronisation für die Heimbasisstationen HBS erfolgt über Funk oder über Festverbindungen mit anderen Netzkomponenten.

Die Rahmenstruktur der Funkübertragung ist aus DE 198 27 916 bekannt. Ein Frequenzband wird abwechselnd zum Senden in Auf- und Abwärtsrichtung genutzt. Eine Teilnehmerseparierung erfolgt auf Zeitschlitzbasis (TDMA time division multiple access), wobei innerhalb der Zeitschlitze die Teilnehmer zusätzlich anhand eines individuellen Spreizkodes (CMDA code division multiple access) unterschieden werden können. Ein solches TDD-Teilnehmerseparierungsverfahren (time division duplex), das für asymmetrische Datendienste vorgesehen ist, läßt sich in Funk-Kommunikationssystemen der 3. Generation insbesondere für mikrozellulare und Indoor-Anwendungen vorteilhaft implementieren.

Die durch die Verschiebung des Umschaltpunktes SP erreichte Asymmetrie des Verkehrs ist dabei zeit- und ortsabhängig, da sie von den aktuell genutzten Diensten der Teilnehmer abhängt. Dem zeit- und ortsabhängigen Bedarf wird durch individuelle Einstellungen des Umschaltpunktes SP in den Funkzellen Z genüge getan, die dem Verkehr folgen und zeitlich rasch veränderbar sind.

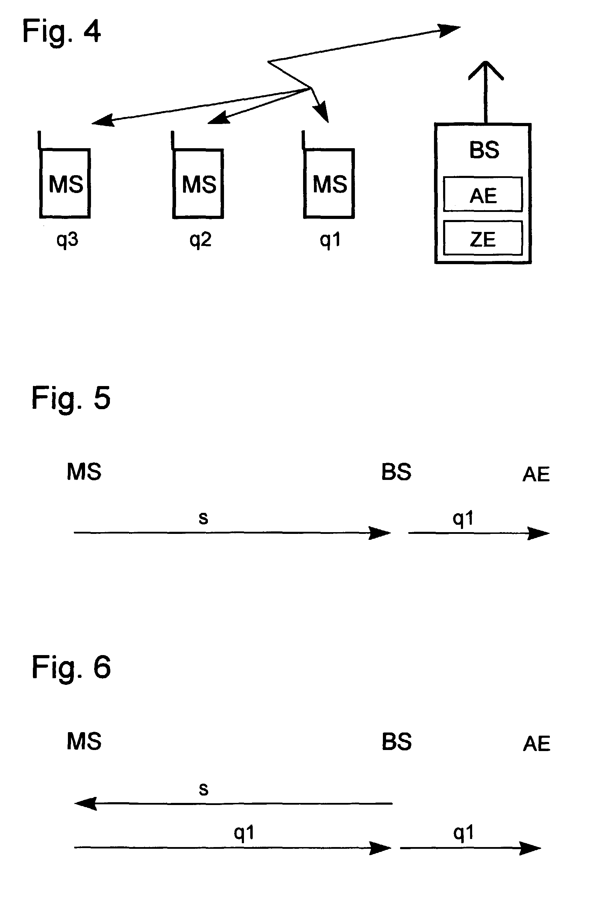

Zusätzlich zu Betrachtungen über eine Zeitschlitzclusterung innerhalb des Mobilfunksystem, wie in DE 198 20 736, und über Zuteilungsstrategien für Verbindungen mit mehreren Kanälen, wie in DE 197 51 110, wird bei der Kanalzuteilung nach dem erfindungsgemäßen Verfahren jeweils ein Übertragungsparameter q1, q2, q3 bezüglich der Übertragungsqualität für die Funkübertragung zwischen der Basisstation BS und mehreren Mobilstationen MS berücksichtigt. In FIG. 4 ist gezeigt, daß pro Mobilstation MS ein Übertragungsparameter q1, q2, q3 der Funkübertragung durch eine Einrichtung AE zur Bestimmung von Übertragungsparametern ermittelt wird. Entsprechend der Erfindung ist es nicht nötig, daß von allen Mobilstationen MS ein Übertragungsparameter vorliegt. Es genügt, daß zumindest einige Mobilstationen MS mit guter Übertragungsqualität ausgewählt werden können. Die Basisstation BS enthält weiterhin eine Zuordnungseinrichtung ZE, die wie später erläutert die Einstellung des Umschaltpunktes SP und Zuordnung der Mobilstationen MS zu Zeitschlitzen durchführt. Die Einrichtung AE zur Bestimmung von Übertragungsparametern und die Zuordnungseinrichtung ZE können alternativ auch in anderen Netzkomponenten integriert sein.

Weiterhin liegt es im Rahmen der Erfindung, daß mehrere Parameter pro Mobilstation MS bestimmt werden, die dann zu dem Übertragungsparameter q1, q2, q3 kombiniert werden. Solche grundlegenden Parameter sind die Signallaufzeit zwischen der Basisstation BS und der Mobilstation MS, die Empfangsleistung bei der jeweils empfangenden Station, der Interferenzeinfluß der Funkübertragung auf benachbarte Funkzellen (die Sendeleistung ist z.B. ein Maß dafür) und die Position der Mobilstation innerhalb der Funkzelle.

Die Übertragungsparameter q1, q2, q3 können sich dabei auf die Funkübertragung in Aufwärts- oder in Abwärtsrichtung beziehen. Der erste Fall ist FIG. 5 gezeigt, wobei Aussendungen s der Mobilstation MS in der Basisstation BS empfangen werden. Eine Einrichtung AE zur Bestimmung von Übertragungsparametern q1 in der Basisstation BS wertet die Empfangssignale aus und bestimmt damit den Übertragungsparameter q1. Alternativ oder zusätzlich wird nach FIG. 6 für Aussendungen s der Basisstation BS in der Mobilstation MS eine Auswertung der Empfangssignale durchgeführt. Die Mobilstation MS bestimmt Werte q1' und signalisiert sie der Basisstation BS. In der Einrichtung AE werden die Werte q1' aufgenommen und daraus den Übertragungsparameter q1 bestimmt.

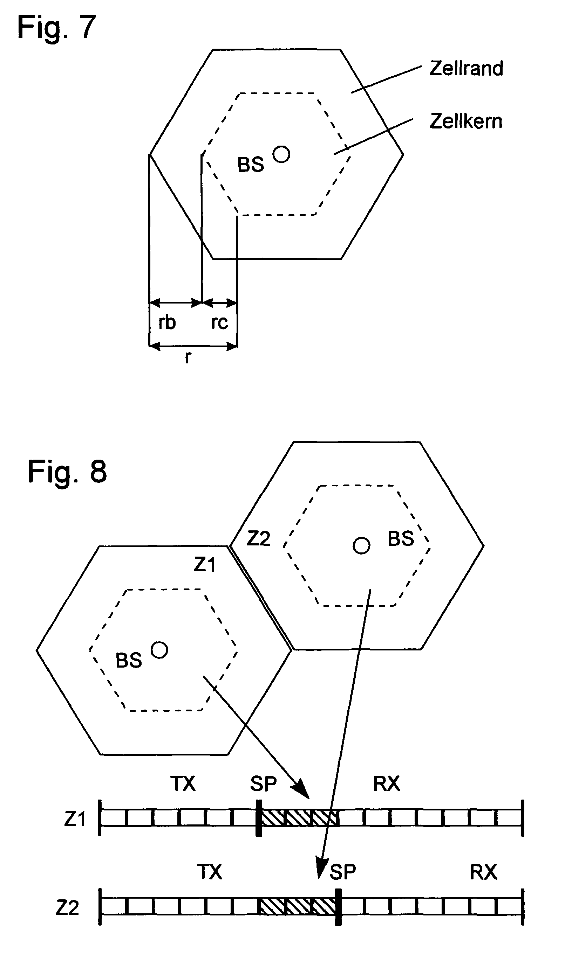

Nach FIG. 7 wird eine Funkzelle, die vereinfacht als Sechseck gezeichnet ist, in einen Zellrand mit einer Breite rb und einen Zellkern mit einer Breite rc unterteilt. Der Gesamtradius der Zelle ist gleich r. Der Zellkern korrespondiert mit guten Übertragungsbedingungen und der Zellrand mit schlechteren Übertragungsbedingungen.

Die Breite rb des Zellrandes ist größer als eine minimale Breite rbmin, wobei die minimale Breite rbmin derart gewählt ist, daß die Dämpfung auf der Strecke zwischen Basisstation BS und Mobilstation MS groß genug ist, um im Zellkern eine Funkübertragung in Aufwärts- und im Zellrand eine Funkübertragung in Abwärtsrichtung zu ermöglichen. Mobilstationen MS mit guten Übertragungsparametern q1 befinden sich im Zellkern. Die Mobilstationen MS der Teilnehmer, die sich im Zellkern befinden werden im folgenden als unkritische Teilnehmer bezeichnet; die Teilnehmer im Zellrand als kritische Teilnehmer.

Für zwei Funkzellen Z1, Z2 benachbarter Basisstationen BS ergibt sich eine Situation nach FIG. 8. Die Funkübertragung beider Basisstationen BS ist zwar rahmensynchronisiert, jedoch sind verkehrsabhängig in beiden Funkzellen Z1, Z2 unterschiedliche Umschaltpunkte SP zwischen dem Sende- TX und Empfangsfall RX der Basisstationen BS eingestellt. Die Zeitschlitze zwischen den beiden Umschaltpunkten SP werden ausschließlich mit unkritischen Teilnehmern gefüllt, so daß die Interferenzen über den Zellenrand hinaus extrem verringert werden. Eine Koordinierung der Umschaltpunkte SP zwischen den Funkzellen Z1, Z2 ist nicht nötig. Somit kann bedarfsgerecht der Umschaltpunkt SP funkzellenspezifisch ohne Verzögerungen eingestellt werden.

Eine solche Kanalzuteilung, die die unkritischen Teilnehmer mit den guten Übertragungsparametern q1 den Zeitschlitzen um den Umschaltpunkt SP bevorzugt zuweist, ist jedoch noch dahingehend limitiert, daß die Anzahl mit unkritischen Teilnehmers zu füllender Zeitschlitze von der Kenntnis des Umschaltpunktes SP auch der benachbarten Funkzelle und der Anzahl von unkritischen Teilnehmer abhängt.

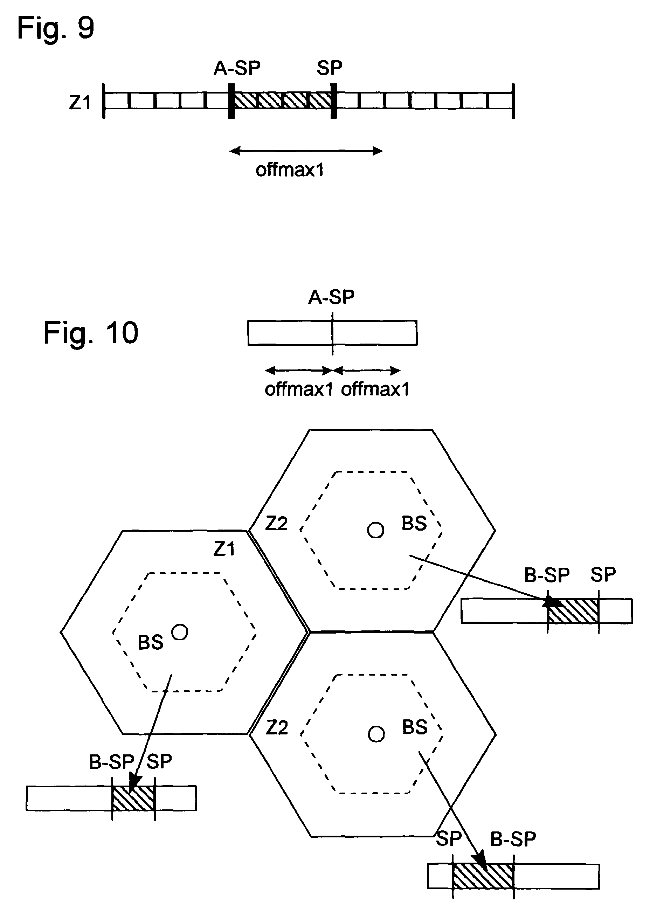

Nach FIG. 9 wird ein Gebietsumschaltpunkt A-SP (area switching point) eingeführt, der für eine Gruppe von Basisstationen BS eines Gebiets definiert ist. Für die Differenz (Anzahl der Zeitschlitze) zwischen dem funkzellenspezifischen Umschaltpunkt SP und dem Gebietsumschaltpunkt A-SP ist eine erste obere Schranke offmax1 festgelegt, die bei der individuellen Einstellung des funkzellenspezischen Umschaltpunkt SP nicht überschritten werden darf. Die erste erste obere Schranke offmax1 ergibt sich aus der aktuellen Anzahl unkritischer Teilnehmer und ist somit zeitabhängig.

Für benachbarte Funkzellen Z1, Z2, Z3 bedeutet dies nach FIG. 10, daß die Zeitschlitze zwischen dem funkzellenspezifischen Umschaltpunkt SP und dem Gebietsumschaltpunkt A-SP mit den unkritischen Teilnehmern gefüllt werden. Ist die Differenz zwischen dem funkzellenspezischen Umschaltpunkt SP und dem Gebietsumschaltpunkt A-SP kleiner als die erste obere Schranke offmax1, dann ist keine Koordination außerhalb der Funkzellen Z1, Z2, Z3 nötig. Jede Basisstation BS kann den Umschaltpunkt SP frei wählen, ohne daß die benachbarten Basisstationen BS in ihrer Wahl eingeschränkt werden. Auch eine Abstimmung mit einer Komponente des Mobilfunksystems, die übergeordnete Funktionen ausführt, z.B. dem RNC, ist nicht nötig.

Die erste obere Schranke offmax1 verhindert jedoch auch die Nutzung von extremen Asymmetrien. Um solche extremen Asymmetrien trotzdem zu unterstützen, z.B. alle Zeitschlitze eines Rahmens nur in Abwärtsrichtung zuweisen, können sich die Gebietsumschaltpunkte A-SP unterschiedlicher Gebiete unterscheiden.

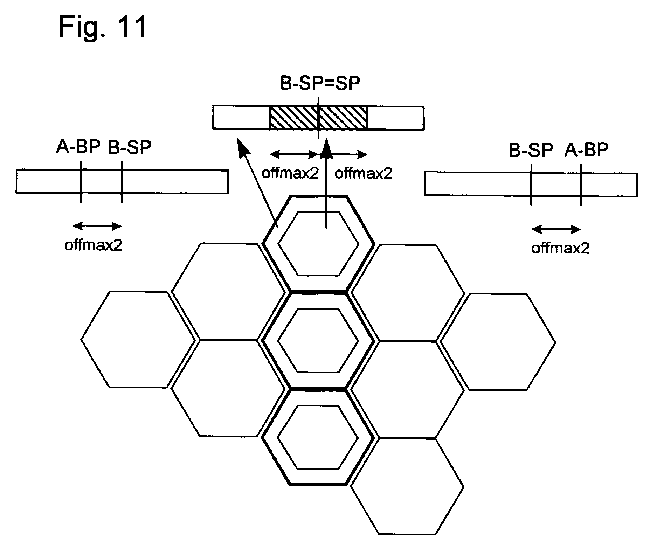

Um dies zu administrieren wird ein Basisumschaltpunkt B-SP (base switching point) eingeführt, der für das gesamte Mobilfunksystem verbindlich ist. Von diesem Basisumschaltpunkt B-SP haben die einzelnen Gebietsumschaltpunkte A-SP unterschiedliche Differenzen, die jedoch nicht größer sein dürfen, als eine zweite obere Schranke offmax2. Nach FIG. 11 wird zudem zwischen Gebieten mit unterschiedlichen Gebietsumschaltpunkten A-SP eine Pufferzone mit Funkzellen eingerichtet, für die der Basisumschaltpunkt B-SP als Umschaltpunkt SP verbindlich ist.

Innerhalb der TDD-Rahmen der Pufferzone wird ein Schutzbereich definiert, der ausgehend vom Basisumschaltpunkt B-SP in beide Richtungen die Anzahl von Zeitschlitzen entsprechend der zweiten oberen Schranke offmax2 umfaßt. Dieser Schutzbereich darf nicht mit kritischen Teilnehmern belegt werden, d.h. diese Zeitschlitze werden unkritischen Teilnehmern zugewiesen oder sie bleiben frei. Wenn genügend unkritische Teilnehmer in den Funkzellen der Pufferzone vorhanden sind, bleiben keine Ressoucen ungenutzt. Wird die zweite obere Schranke offmax2 nicht allzu groß eingestellt, dann ist dies in der Regel der Fall.

Durch die Administrierung von funkzellenspezifischen, Gebiets- und Basisumschaltpunkten SP, A-SP, B-SP wird ein asymmetrischen Verkehr mit schnellen Verlagerungen der Ressourcen von der Auf- auf die Abwärtsrichtung und umgekehrt unterstützt, ohne daß ein größere Signalisierungsaufwand zur Koordination zwischen den Basisstationen BS nötig ist. Die störenden Interferenzen der Funkübertragung zwischen den bleiben trotzdem gering.

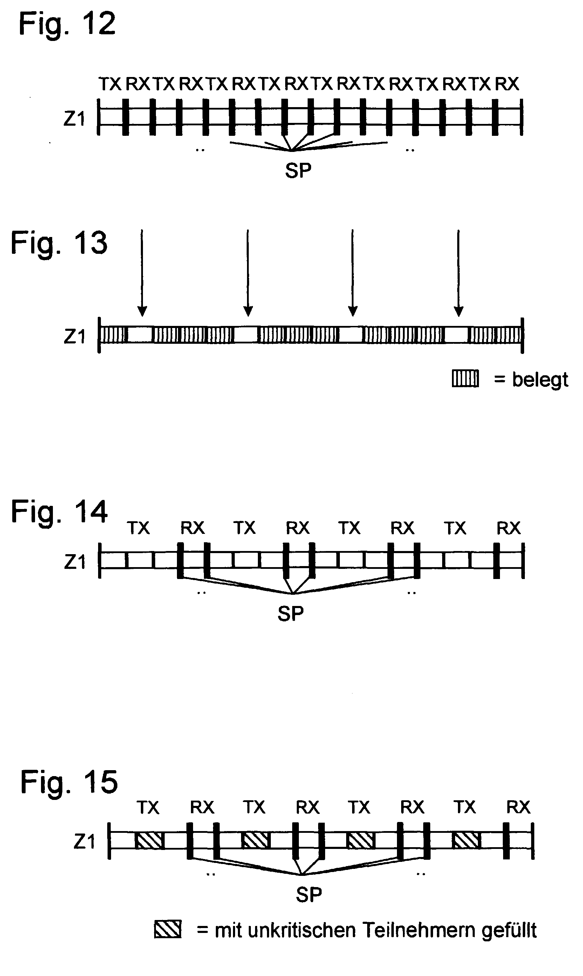

Anhand von FIG. 12 bis 15 wird ein Ausführungsbeispiel in einer Funkzelle Z1 erläutert, das Bezug auf einen TDD-Rahmen nimmt, in dem standardmäßig mehrere Umschaltpunkte SP zwischen Aufwärtsrichtung und Abwärtsrichtung festgelegt sind. Jeder der Umschaltpunkte SP trennt wiederum den Sende- TX und Empfangsfall RX für die Basisstation BS. Ein beispielhaftes Standard-TDD-Schema ist somit festgelegt, daß nach jedem Zeitschlitz ein Umschalten der Übertragungsrichtung vorsieht (FIG 12). Es liegt im Rahmen der Erfindung, daß auch andere Kombinationen möglich sind.

Ist die Abwärtsrichtung (Sendefall TX) stärker ausgelastet als die Aufwärtsrichtung (Empfangsfall RX), so ist eine dem asymmetrischen Bedarf besser angepaßt Einstellung der Umschaltpunkte SP wünschenswert. FIG. 13 zeigt einen solchen Fall, bei dem einige der Zeitschlitze für die Aufwärtsrichtung nicht genutzt sind währenddessen die Abwärtsrichtung vollständig ausgelastet ist.

Um dem gerecht zu werden, wird in der Funkzelle Z1 vom Standard-TDD-Schema abgewichen und die Umschaltpunkte SP nach FIG. 14 neu eingestellt, so daß mehr Übertragungskapazität in Abwärtsrichtung zur Verfügung steht. Dies wird erreicht, indem die Umschaltpunkte SP nicht verschoben sondern einige der Umschaltpunkte SP aufgehoben (bzw. hinzukommen) werden. Dazu müssen jedoch die Zeitschlitze, deren Übertragungsrichtung umgeschaltet werden sollen, vorher unbelegt sein. Die anschließende Zuteilung von Mobilstationen MS zu diesen umgeschalteten Zeitschlitzen erfolgt derart, daß die unkritschen Teilnehmer diesen Zeitschlitzen zugeteilt werden. Diese Zeitschlitze sind damit nicht unbedingt nahe dem nächsten Umschaltpunkt SP, sondern nach FIG. 15 beispielsweise in der Mitte von drei Zeitschlitzen für die Abwärtsrichtung.

Die Abweichung vom Standard-TDD-Schema erfolgt in voreingestellter bzw. mit den Nachbarbasisstationen abgesprochener Weise. So wird beispielsweise in einem Rahmen nach FIG. 15 zuerst der zweite, später der sechste, zehnte und zuletzt der vierzehnte Zeitschlitz je nach Bedarf umgeschaltet. Diese Umschaltung erfolgt in dieser Weise, wenn auch unabhängig voneinander, in mehreren Basisstationen BS. Die unkritschen Teilnehmer werden besonders den zuletzt umgeschalteten Zeitschlitzen zugeteilt. Damit sinkt die Anzahl der Mobilstationen MS mit guten Übertragungsbedingungen, die zum Auffüllen dieser Zeitschlitze benötigt werden. Ist die Zahl der Mobilstationen MS mit guten Übertragungsbedingungen nicht ausreichend, so wird trotzdem eine geringstmögliche Interferenz erreicht.

Das Standard-TDD-Schema ist räumlich in zumindest Teilen des Funk-Kommunikationssystems invariant, kann aber zeitlich variant sein, durch erneute Festlegung.

## Patentansprüche

1. Verfahren zur Kanalzuweisung in einem Funk-Kommunikationssystem, bei dem
- für eine Funkübertragung zwischen einer Basisstation (BS) und Mobilstationen (MS) ein TDD-Übertragungsverfahren mit Zeitschlitzen (ts) als Kanälen benutzt wird, wobei ein Umschaltpunkt (SP) Zeitschlitze (ts) für die Aufwärtsrichtung und Zeitschlitze (ts) für die Abwärtsrichtung trennt,
- für die Funkübertragung zwischen der Basisstation (BS) und mehreren Mobilstationen (MS) jeweils ein zumindest Übertragungsparameter (q1, q2, q3) bezüglich der Übertragungsqualität bestimmt wird,
- den Mobilstationen (MS) mit dem qualitativ besseren Übertragungsparameter (q1) bevorzugt Zeitschlitze (ts) nahe dem Umschaltpunkt (SP) zugewiesen werden.

2. Verfahren nach Anspruch 1, bei dem
für eine Gruppe benachbarter Basisstationen (BS) ein Gebietsumschaltpunkt (A-SP) festgelegt wird und den Mobilstationen (MS) mit dem qualitativ besseren Übertragungsparameter (q1) bevorzugt Zeitschlitze (ts) zwischen dem funkzellenspezifischen Umschaltpunkt (SP) und dem Gebietsumschaltpunkt (A-SP) zugewiesen werden.

3. Verfahren nach Anspruch 2, bei dem
eine erste obere Schranke (offmax1) für die Differenz zwischen dem funkzellenspezifischen Umschaltpunkt (SP) und dem Gebietsumschaltpunkt (A-SP) festgelegt wird, die administrierbar ist.

4. Verfahren nach Anspruch 3, bei dem
die erste obere Schranke (offmax1) abhängig von der Anzahl von Mobilstationen (MS) eingestellt wird, für die ein qualitativ guter Übertragungsparameter (q1) bestimmt wurde.

5. Verfahren nach einem der vorherigen Ansprüche, bei dem
im Funk-Kommunikationssystem ein Basisumschaltpunkt (B-SP) festgelegt ist, von dem die funkzellenspezifischen Umschaltpunkte (SP) bzw. die Gebietsumschaltpunkte (A-SP) nur eine Abweichung von maximial einer zweiten oberen Schranke (offmax2) haben dürfen.

6. Verfahren nach Anspruch 5, bei dem
zwischen Gruppen von Basisstationen (BS) mit unterschiedlichen Gebietsumschaltpunkten (A-SP) Pufferzonen mit Funkzellen (Z) administriert werden, in denen der Basis-Umschaltpunkt (B-SP) verbindlich ist.

7. Verfahren zur Kanalzuweisung in einem Funk-Kommunikationssystem, bei dem
- für eine Funkübertragung zwischen einer Basisstation (BS) und Mobilstationen (MS) ein TDD-Übertragungsverfahren mit Zeitschlitzen (ts) als Kanälen benutzt wird, wobei zumindest ein Umschaltpunkt (SP) Zeitschlitze (ts) für die Aufwärtsrichtung und Zeitschlitze (ts) für die Abwärtsrichtung trennt,
- für die Position des Umschaltpunkts (SP) oder der Umschaltpunkte (SP) ein Standard-TDD-Schema festgelegt wird,
- für die Funkübertragung zwischen der Basisstation (BS) und mehreren Mobilstationen (MS) jeweils ein zumindest Übertragungsparameter (q1, q2, q3) bezüglich der Übertragungsqualität bestimmt wird,
- den Mobilstationen (MS) mit dem qualitativ besseren Übertragungsparameter (q1) bevorzugt Zeitschlitze (ts) zugewiesen werden, die entgegen dem Standard-TDD-Schema für die umgekehrte Übertragungsrichtung genutzt werden.

8. Verfahren nach einem der vorherigen Ansprüche, bei dem
der Übertragungsparameter (q1, q2, q3) jeweils auf eine Signallaufzeit zwischen der Basisstation (BS) und der Mobilstation (MS) bezogen ist, wobei kurze Signallaufzeiten qualitativ besser sind.

9. Verfahren nach einem der vorherigen Ansprüche, bei dem
der Übertragungsparameter (q1, q2, q3) jeweils auf eine Empfangsleistung bei der jeweils empfangenden Station (BS, MS) bezogen ist, wobei hohe Empfangsleistungen qualitativ besser sind.

10. Verfahren nach einem der vorherigen Ansprüche, bei dem
der Übertragungsparameter (q1, q2, q3) jeweils auf den Interferenzeinfluß der Funkübertragung von und/oder zur Mobilstation (MS) auf benachbarte Funkzellen (Z) bezogen ist, wobei ein geringer Interferenzeinfluß qualitativ besser ist.

11. Verfahren nach einem der vorherigen Ansprüche, bei dem
der Übertragungsparameter (q1, q2, q3) jeweils auf die Position der Mobilstation (MS) innerhalb der Funkzelle (Z) der Basisstation (BS) bezogen ist, wobei eine Position im Kernbereich der Funkzelle (Z) qualitativ besser ist.

12. Verfahren nach einem der vorherigen Ansprüche, bei dem
die Funkübertragung innerhalb von zumindest Teilen des Funk-Kommunikationssystems rahmensynchron ist und die Umschaltpunkte (SP) benachbarter Basisstationen (BS) verkehrsabhängig eingestellt werden.

13. Funk-Kommunikationsystem
mit mehreren Basisstationen (BS) und Mobilstationen (MS), die mit den Basisstationen (BS) über eine nach einem TDD-Übertragungsverfahren mit Zeitschlitzen (ts) als Kanälen organisierte Funkschnittstelle verbunden sind, wobei ein Umschaltpunkt (SP) Zeitschlitze (ts) für die Aufwärtsrichtung und Zeitschlitze (ts) für die Abwärtsrichtung trennt,
- wobei die Basisstationen (BS) eine Einrichtung (AE) zur Bestimmung von Übertragungsparametern (q1, q2, q3) bezüglich der Übertragunqsqualität zwischen Basisstation (BS) und jeweils einer Mobilstation (MS) enthalten,
- wobei die Basisstationen (BS) eine Zuordnungseinrichtung (ZE) zur Einstellung des Umschaltpunkt (SP) und zur Zuordnung von Zeitschlitzen (ts) nahe dem Umschaltpunkt (SP) bevorzugt an Mobilstationen (MS) mit dem qualitativ besseren Übertragungsparameter (q1).

14. Funk-Kommunikationssystem nach Anspruch 13, bei dem
die Einrichtung (AE) zur Bestimmung von Übertragungsparametern (q1, q2, q3) die von den Basisstationen (BS) empfangenen Signale der Mobilstationen (MS) auswertet.

15. Funk-Kommunikationssystem nach Anspruch 13 oder 14, bei dem die Einrichtung (AE) zur Bestimmung von Übertragungsparametern (q1, q2, q3) die von den Mobilstationen (MS) empfangenen Signale der Basisstationen (BS) nach Signalisierung von auf den Übertragungsparameter (q1) bezogenen Parametern (q1') durch die Mobilstationen (MS) auswertet.
